# EUROPEAN PATENT SPECIFICATION

(11) **EP 4 205 932 B1**
(45) Date of publication and mention of the grant of the patent: **16.10.2024**
(21) Application number: 22217149.8
(22) Date of filing: 29.12.2022
(51) Int. Cl.: B29B 7/32, B29B 7/74, B29B 7/88, B01F 25/313, B01F 25/431

(54) **METHOD AND FLANGE DEVICE FOR IN-LINE ADDITION AND MIXING OF ADDITIVES, AS WELL AS ADHESIVE SO PRODUCED**
VERFAHREN UND FLANSCHVORRICHTUNG ZUM IN-LINE ZUFÜHREN UND MISCHEN VON ADDITIVEN, SOWIE DANACH HERGESTELLTER KLEBSTOFF
PROCÉDÉ ET BRIDE POUR L'ADDITION ET LE MALAXAGE D'ADDITIFS EN LIGNE, ET ADHÉSIF AINSI PRODUIT

(30) Priority: 30.12.2021 BE 202106109
(43) Date of publication of application: 05.07.2023
(73) Proprietor: Soudal N.V., 2300 Turnhout (BE)
(72) Inventor: BRUGGEMAN, Peter, 2300 Turnhout (BE); FEREMANS, Walter, 2300 Turnhout (BE); GOETSCHALCKX, Jeroen, 2300 Turnhout (BE); VAN DELM, Chris, 2300 Turnhout (BE)
(74) Representative: Brantsandpatents bv

(56) References cited:
- WO-A1-96/15890
- DE-A1- 4 428 813
- DE-C1- 19 735 622
- US-A- 4 093 188
- US-A1- 2009 198 036

## Description

### TECHNICAL FIELD

The invention relates to a method for in-line addition and mixing of one or more catalysts and/or pigments and/or fungicides to/with a liquid fraction of sealants and/or adhesives, prior to a filling process.

In a second aspect, the invention relates to a flange device suitable for carrying out the method.

In a third aspect, the invention relates to the use of a flange device.

In a fourth aspect, the invention relates to a final product obtained according to the method.

### PRIOR ART

A known method for adding and mixing catalysts and/or pigments and/or fungicides to/with a liquid fraction of sealants and/or adhesives prior to a filling process is known per se. A known method comprises adding the catalysts and/or pigments and/or fungicides during mixing of a liquid fraction of sealants and/or adhesives in mixing vats provided for this purpose. The catalysts and/or pigments and/or fungicides are added and mixed with the sealants and/or adhesives by means of a rotating agitator. The liquid fraction is then pumped from the mixing vats to a storage tank. If the liquid fraction from the storage tanks has to be used for a filling process, the fraction is pumped from the storage tanks to a dosing installation. This known method involves some problems and drawbacks.

Catalysts make sealants and/or adhesives more sensitive to moisture. The purpose of a catalyst is to accelerate the final curing upon application/use of the sealants and/or adhesives. The known method is particularly disadvantageous for the addition of catalysts since premature curing can occur. This can occur during the pumping of the liquid fraction, as a result of which conduits can become clogged. Premature curing can also occur during mixing or in the storage tanks, with the result that the fraction has become unusable and there is an increased risk of clogging.

US20090198036 discloses a process for continuous manufacturing of moisture curable polyurethane formulations used as sealants and adhesives.

WO 1996015890 describes a device for feeding the individual components of liquid multi-component plastics via connecting pipes to a multi-component mixing head. The multi-component mixing head is designed with valve seals with a minimum of two component containers.

DE19735622 describes a machine for filling viscous sealing compound, using a motor-driven gear pump as a dosing pump for the main component in combination with a plunger pump.

A disadvantage of these devices is the difficulty of cleaning, poor mixing, incorrect dosing and rapid wear.

An additional disadvantage of the known method is that one storage tank contains only one fraction with a fixed volume percentage of catalyst and/or pigments and/or fungicides. Consequently, several storage tanks are required, each filled with a fraction with a different volume percentage of catalyst and/or pigments and/or fungicides, in particular when final products with different volume percentages of catalyst and/or pigments and/or fungicides are required during the filling process. There is therefore a need for a method that makes more efficient use of storage tanks and can continue to meet orders with final products containing variable volume percentages of catalyst and/or pigments and/or fungicides.

An additional disadvantage of the known method is that when a fraction is stored in a storage tank, the homogeneity of the fraction is lost over time. In concrete terms, heavier components of the fraction could settle, causing a phase separation. This preemptively requires an additional agitation operation before a fraction can be used for a filling process. This additional agitation operation is therefore not economically efficient. There is therefore a need for an economically more efficient method for adding and mixing catalysts and/or pigments and/or fungicides to/with a liquid fraction of sealants and/or adhesives whereby premature curing of the sealants and/or adhesives can be avoided.

The present invention aims to find a solution for at least some of the above problems.

### SUMMARY OF THE INVENTION

The invention relates to a method according to claim 1. In particular, in a first aspect the invention relates to a method for in-line addition and mixing of one or more catalysts and/or pigments and/or fungicides to/with a liquid fraction of sealants and/or adhesives, prior to a filling process. The method comprises steps in a specific order.

In a first step, the method involves the in-line addition of a dosed volume, which volume comprises one or more catalysts and/or pigments and/or fungicides, to a conduit containing a liquid fraction of sealants and/or adhesives, the conduit being connected at its distal end to the inlet of a cylindrical flange for homogeneously mixing the components present in the liquid fraction.

A second step then involves setting a pressure at the inlet of the flange. Finally, a final step comprises mechanically pressing the liquid fraction and the dosed volume of catalyst and/or pigments and/or fungicides through the entire length direction of the flange, the flange being provided with an injection nozzle at a distal end, wherein the liquid fraction and the dosed volume of catalyst and/or pigments and/or fungicides are divided into different layers during pressing, so that the different components present in the liquid fraction and the dosed volume of catalyst and/or pigments and/or fungicides are spread over the whole diameter of the flange, resulting in a completely homogeneously mixed liquid fraction of sealants and/or adhesives with one or more catalysts and/or pigments and/or fungicides in the injection nozzle of the flange.

An advantage of the present invention is that in an economically advantageous and efficient manner, one or more catalysts and/or pigments and/or fungicides are added to a liquid fraction of sealants and/or adhesives. An additional advantage is that the added catalysts and/or pigments and/or fungicides are homogeneously mixed with the liquid fraction prior to a filling process.

An additional advantage of the present invention is that a specific dosed volume of catalyst and/or pigments and/or fungicides is added per final product, in particular per filling unit. This results in a flexible method whereby final products with different volume percentages of catalyst and/or pigments and/or fungicides are simply filled in succession. There is no need for additional method steps or devices to achieve this.

An advantage of the present invention is that no storage tanks are required for the temporary storage of a liquid fraction prior to a filling process. This results in a space saving as well as a cost saving. A special additional advantage is that a catalyst is only added just before the filling process. This prevents premature curing of the liquid fraction in conduits or storage tanks. In addition, a catalyst and/or pigments and/or fungicides are homogeneously mixed with the sealants and/or adhesives immediately after addition.

A remarkable advantage of the present invention is that both the addition of a catalyst and/or pigments and/or fungicides and the mixing of this catalyst and/or pigments and/or fungicides with sealants and/or adhesives, as well as the filling of the final products, is carried out by means of one series of successive method steps. Moreover, these method steps can be carried out by means of one suitable device.

A surprising advantage of the present invention is that it is also suitable for adding other components than just catalysts and/or pigments and/or fungicides. In particular, the invention is also suitable for adding plasticizers.

In a second aspect, the invention relates to a flange device according to claim 8 suitable for carrying out a method according to the first aspect, wherein a flange device comprises a hollow cylindrical flange housing, wherein the cylindrical flange housing extends along a longitudinal axis, said flange housing comprising at least one static mixing element, said static mixing element comprising a grid of rod-shaped elements, the grid extending in a direction transverse to the longitudinal axis of the cylindrical flange housing.

An advantage of the present invention is that an optimal mixing is achieved between sealants and/or adhesives with the catalyst and/or pigments and/or fungicides. An additional advantage is that the length of the flange device remains limited and a homogeneous mixing is still obtained in an injection nozzle of the flange device. A surprising advantage is that a flange device can be flexibly designed according to the requirements of the desired final products.

In a third aspect, the invention relates to the use according to claim 13 of a flange device for mixing or bringing media into contact with each other, at least one of which is a highly viscous liquid, preferably sealants and/or adhesives. An advantage of the present invention is that optimal contact between at least one highly viscous liquid and another media is achieved, wherein all media are mixed in an efficient way.

In a fourth aspect, the invention relates to a final product according to claim 14 obtained by a method according to the first aspect, wherein a final product comprises a filling unit, which filling unit comprises a homogeneously mixed liquid fraction, which fraction comprises sealants and/or adhesives mixed with one or more catalysts and/or pigments and/or fungicides at a desired volume percentage.

An advantage of the present invention is that a final product can contain a wide range of possible catalysts and/or pigments and/or fungicides or combinations of these catalysts and/or pigments and/or fungicides. An additional advantage is that each final product can contain a different volume percentage of catalyst and/or pigments and/or fungicides.

### DETAILED DESCRIPTION

The invention relates to a method for in-line addition and mixing of one or more catalysts and/or pigments and/or fungicides to/with a liquid fraction of sealants and/or adhesives, prior to a filling process.

Unless otherwise defined, all terms used in the description of the invention, including technical and scientific terms, have the meaning as commonly understood by a person skilled in the art to which the invention pertains. For a better understanding of the description of the invention, the following terms are explained explicitly. Under the present invention, a catalyst comprises a substance capable of accelerating the final curing of sealants and/or adhesives. The catalyst makes sealants and/or adhesives much more sensitive to moisture. A catalyst is therefore preferably added quite late in the manufacturing process, if possible even as the last ingredient just before a filling process to avoid premature curing.

The traditional catalysts were usually based on tin (Sn). More modern catalysts are based on titanium (Ti), preferably in the form of titanates, or on bismuth (Bi), and are preferred mainly for ecological reasons. Suitable catalysts can be found, for example, in the following product families: dibutyltin diacetate, dioctyltin diacetate, dibutyltin dilaurate, dioctyltin dilaurate, dibutyltin dicarboxylate, dioctyltin dicarboxylate, dibutyltin dineodecanoate, dioctyltin dineodecanoate, dibutyltin oxide mixtures, dioctyltin oxide mixtures, acetylacetonate and other titanium and/or bismuth based catalysts. Suitable catalysts based on calcium (Ca) and/or zinc (Zn) are also available.

Suitable products are, for example, catalysts available under the trade name TIB KATO, such as types 216, 217, 218, 219, 221, 223, 226, 229, 232, 233, 248 and 318, available from TIB Chemicals AG.

Sealants and/or adhesives are highly viscous liquids which essentially comprise a mixture. An example of such a mixture comprises at least one silane-modified polymer.

A silane-modified polymer comprises at least one silane group of the general formula:

-(A)_{b}-(CH₂)ₘ-SiR¹ₐ(Y)₃₋ₐ

wherein:
- each A independently represents a divalent linking group selected from the group consisting of: -O-, -S-, -(R²)N-, -O-CO-N(R²)-, -N(R²)-CO-O- , -N(R²)-CO-NH-, -NH-CO-N(R²)-, and -N(R²)-CO-N(R²)-, where R² stands for hydrogen, C₁₋₁₈ alkyl, C₂₋₁₈ alkenyl or C₁₋₆ aryl group;
- R¹ is a C₁₋₁₀ alkyl, C₂₋₁₀ alkenyl, C₁₋₁₀ cycloalkyl or C₆₋₁₀ aryl group;
- each Y is each independently a hydroxyl or hydrolyzable group;
- a represents an integer in the range of 0 and 3;
- b represents an integer in the range of 0 to 1 ;
- m represents an integer in the range 0 to 6.

It should be understood that any silane group of the above general formula may act as a side group and/or an end group attached to at least one main chain of the silane-modified polymer.

The components of the at least one main chain of the silane-modified polymer as described above are not particularly limited.

Preferably, suitable backbone components of the silane-modified polymer are selected from one or more components selected from a group consisting of polyurethanes, polyureas, polyethers, polyesters, polyacrylates and polymethacrylates, polycarbonates, polyamides, polyvinyl esters, or a mixture of two or more thereof.

Alternatively, suitable backbone components of the silane-modified polymer are monomeric units selected from a group consisting of: acrylic monomers, silicone monomers, carboxylic acid monomers, alcohols, isocyanate monomers, epoxide monomers, allyl monomers, amine monomers, anhydride monomers, styrene monomers, vinyl monomers or mixtures of them.

A second example of a mixture of sealants and/or adhesives comprises one or more silicone polymers. An example of such silicone polymers are polysiloxanes and polysiloxane-urea/urethane copolymers.

A third example of a mixture of sealants and/or adhesives comprises a mixture of a polyol fraction with a diisocyanate fraction. Examples of diisocyanates are methylene diphenyl diisocyanate (MDI), isophorone diisocyanate (IPDI) or 2,4-toluene diisocyanate (TDI).

A fourth example of a mixture of sealants and/or adhesives comprises a dispersion, preferably an acrylate dispersion or a polyurethane dispersion.

Under the present invention, a static mixing element comprises a precision-engineered device for continuous mixing of liquid materials, with no moving components. A static mixing element is preferably contained in a housing. Specifically, for the present invention, the housing is a cylindrical flange housing. The energy required for mixing comes from a pressure drop as the fluids flow through the housing containing static mixing elements. The size of a static mixing element can vary from about 6 mm to 500 mm in diameter, preferably up to 250 mm, more preferably up to 150 mm, even more preferably up to 100 mm, and even more preferably up to 75 mm. Typical construction materials for static mixing elements are stainless steel, polypropylene, Teflon, PVDF, PVC, CPVC and polyacetal. In the latest designs, the static mixing elements are made of glass-clad steel.

Under the present invention, a filling unit comprises a volume unit of a final product. A filling unit is preferably filled during a filling process by means of an injection nozzle.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numerical intervals by endpoints comprises all integers, fractions and/or real numbers between the endpoints, these endpoints included.

In a first aspect, the invention relates to a method for in-line addition and mixing of one or more catalysts and/or pigments and/or fungicides to/with a liquid fraction of sealants and/or adhesives, prior to a filling process. The method comprises steps in the specific order of:
- the in-line addition of a dosed volume, which volume comprises one or more catalysts and/or pigments and/or fungicides, to a conduit containing a liquid fraction of sealants and/or adhesives, the conduit being connected at a distal end to an inlet at a proximal end of a cylindrical flange for homogeneously mixing the components present in the liquid fraction and the dosed volume of catalyst and/or pigments and/or fungicides;
- subsequently setting a pressure at the inlet of the flange;
- finally, mechanically pressing the liquid fraction and the dosed volume of catalyst and/or pigments and/or fungicides through the entire length direction of the flange, the flange being provided with an injection nozzle at a distal end, wherein the liquid fraction and the dosed volume of catalyst and/or pigments and/or fungicides are divided into different layers during pressing, so that the different components present in the liquid fraction and the dosed volume of catalyst and/or pigments and/or fungicides are spread over the whole diameter of the flange, resulting in a completely homogeneously mixed liquid fraction of sealants and/or adhesives with one or more catalysts and/or pigments and/or fungicides in the injection nozzle of the flange.

In an embodiment of the present invention, a pressure set at the inlet of the flange is a pressure in the range of 5-180 bar, preferably in the range of 25-165 bar and most preferably in the range of 50-150 bar. With more viscous liquid fractions a higher pressure will be set within the specified range and with less viscous liquid fractions a lower pressure will be set within the specified range. Setting a pressure has the advantage that the viscous liquid fraction and the dosed volume of catalyst and/or pigments and/or fungicides will be pressed through a flange at an economically efficient flow rate.

According to an embodiment, the mechanical pressing of the liquid fraction and the dosed volume of catalyst and/or pigments and/or fungicides through the entire length direction of the flange is carried out by a piston pump with piston adapted to create a pressure by moving in a vertical direction. According to an embodiment, the piston is continuously flushed with plasticizer. This prevents curing components from adhering to the piston surface, which could cause wear and oxygen interference.

In an embodiment of the present invention, a dosed volume will be added radially before the inlet of the flange. In a further embodiment of the present invention, a dosed volume will be added to obtain a volume percentage of catalyst in the final mixed liquid fraction. This volume percentage is a percentage equal to or less than 10 vol%, preferably equal to or less than 7.5 vol% and most preferably equal to or less than 5 vol% of the volume of the liquid fraction. In a preferred embodiment of the present invention, a dosed volume will be added depending on a desired volume percentage in a final product.

An advantage of such a preferred embodiment is that a specific dosed volume of catalyst and/or pigments and/or fungicides is added per final product, in particular per filling unit. This results in a flexible method whereby final products with different volume percentages of catalyst and/or pigments and/or fungicides are simply filled in succession. A special additional advantage is that a catalyst is only added just before the filling process. This prevents premature curing of the liquid fraction in conduits or storage tanks. In addition, a catalyst and/or pigments and/or fungicides are homogeneously mixed with the sealants and/or adhesives immediately after addition.

In an embodiment of the present invention, the liquid fraction and dosed volume of catalyst and/or pigments and/or fungicides comprises a flow rate through the flange of 1-1000 mm/s, preferably 10-500 mm/s and most preferably 20-300 mm/s. These speeds are particularly achievable by means of a set pressure at the inlet of the flange according to a previously described embodiment. An advantage of such speeds is that an economically advantageous method is achieved, while the liquid fraction and the dosed volume of catalyst and/or pigments and/or fungicides are still uniformly mixed.

In an embodiment of the present invention, an initial liquid fraction of sealants and/or adhesives will be pumped from a storage tank or mixing vat through a conduit to the inlet of the flange. In a preferred embodiment, the liquid fraction is pumped by means of a piston pump, which is suitable for pumping highly viscous liquids. In another embodiment of the present invention, an initial liquid fraction of sealants and/or adhesives will be pumped directly from a mixing vat in which the sealants and/or adhesives are mixed. An advantage of these embodiments is that no or fewer storage tanks are required for the temporary storage of a liquid fraction prior to a filling process. This results in a space saving as well as a cost saving.

According to an embodiment, the method comprises the step of continuously circulating catalyst mixtures or pigment pastes in a closed circuit. In an embodiment, the method comprises the step of mixing catalyst mixtures or pigment pastes in a buffer vessel. As a result, there is no phase separation of the mixed components.

According to an embodiment, dry air is blown over the buffer vessel of the components to be mixed. Crystallization in the liquid to be dosed could clog the injection system, causing incorrect dosing. This is avoided by avoiding contact with humidity.

According to an embodiment, the method comprises the step of replacing the static mixing elements. A switch happens with color transitions when switching from dark to light colors. Dirty parts can then be cleaned. According to an embodiment, the static mixing elements are cleaned by pyrolysis and/or sandblasting. According to an embodiment, the pyrolysis continues at 350-900°C under an oxygen-free atmosphere. Preferably, the pyrolysis continues until the weight of the static mixing elements changes less than 1 g/hour. Because the static mixing elements are in the flange housing, they can be easily detached.

According to an embodiment, the dosed volume added in-line is measured by a flowmeter operating ultrasonically. According to an embodiment, flowmeters are used to measure the dose. This ensures correct dosing. According to an embodiment, flowmeters that operate ultrasonically are used. Known devices work with a gear counter, but this causes problems when liquid components such as catalyst mixture and fungicide are dosed. Problems identified include inter-gear leakage and jamming due to crystals formed in the liquid components. These problems lead to regular downtime and a lot of maintenance. The mass flow meters that operate ultrasonically have higher accuracy and fast response in case of incorrect dosing.

A remarkable advantage of the present invention is that both the addition of a catalyst and/or pigments and/or fungicides and the mixing of this catalyst and/or pigments and/or fungicides with sealants and/or adhesives, as well as the filling of the final products, is carried out by means of one series of successive method steps.

In a second aspect, the invention relates to a flange device suitable for carrying out a method according to the first aspect, wherein a flange device comprises a hollow cylindrical flange housing, wherein the cylindrical flange housing extends along a longitudinal axis, said flange housing comprising at least one static mixing element, said static mixing element comprising a grid of rod-shaped elements, the grid extending in a direction transverse to the longitudinal axis of the cylindrical flange housing. A longitudinal axis comprises an axis parallel to the longitudinal direction of the flange device.

In an embodiment of the present invention, a flange device has a diameter, wherein the diameter is measured from wall to wall in the hollow cylindrical flange housing, wherein the diameter of the flange device is approximately equal to a diameter of the static mixing element. In a preferred embodiment, the diameter of the static mixing element is equal to the diameter of the flange device. An advantage of such an embodiment is that in this way an optimal mixing is achieved between sealants and/or adhesives with the catalyst and/or pigments and/or fungicides.

In a preferred embodiment of the present invention, two to four static mixing elements are provided in a flange device. In a particularly preferred embodiment, three static mixing elements are provided in a flange device. An advantage of such embodiments is that optimum mixing is achieved by means of an economically relevant number of static mixing elements.

In an embodiment of the present invention, a main flow direction for the liquid fraction and the dosed volume of catalyst and/or pigments and/or fungicides is determined along the longitudinal axis of the flange device. In a further embodiment, one or more static mixing elements are built in along the entire length of the flange device. In a preferred embodiment, therefore, the flange device is filled over its entire length with static mixing elements, wherein the static mixing elements have the same diameter as the flange device.

When a main flow direction, which preferably flows along the longitudinal axis of the flange device, is set, according to this preferred embodiment, each flowing liquid molecule of the liquid fraction and the dosed volume of catalyst and/or pigments and/or fungicides will touch a static mixing element. Each rod element of a static mixing element therefore forms an obstacle to the flowing liquid molecule, so that the liquid molecule is deflected before the liquid molecule hits the rod element. Within the static mixing element it therefore no longer applies that a liquid molecule flows in the direction of the main flow direction. The deflection of the liquid molecule from the main flow direction results in a thorough mixing of the liquid fraction and dosed volume of catalyst and/or pigments and/or fungicides. It follows that the mixing effect improves with increasing deflection from the main flow direction. Such a preferred embodiment has the advantage that the length of the flange device remains limited and a homogeneous mixing is still obtained in the injection nozzle of the flange.

In an embodiment of the present invention, a flange device has a length which is determined in relation to the viscosity of the liquid fraction to be mixed and in relation to the required homogeneity after mixing. An advantage of such an embodiment is that a flange device can be flexibly designed according to the requirements of the desired final products. Concretely, a liquid fraction with a higher viscosity or a higher required homogeneity will require a longer flange device. Obviously, the reverse also applies for a liquid fraction with a low viscosity or low required homogeneity.

According to an embodiment, the flange device comprises 2-5 static mixing elements in series. When mixing highly shear sensitive products, only 2 or 3 static mixing elements are used in series. Correctly aligning the various static mixing elements in series improves their efficiency. According to an embodiment, each static mixing element comprises a grid of rod-shaped elements, the grid extending in a direction transverse to the longitudinal axis of the cylindrical flange housing. According to an embodiment, the flange device comprises 2-5 static mixing elements in series wherein the various static mixing elements are arranged so that the direction of each grid is transverse to the direction of adjacent grids. Because the direction of the grids alternates, a better mixing is achieved. The static mixing elements fit together nicely. The correct placement is to rotate elements 90° relative to each other so that the pattern continues nicely. According to an embodiment, the length of the static mixing element is 15-25 cm, preferably 20-23 cm. According to an embodiment, the width and height of the static mixing element is 40-60 mm, preferably 48-52 mm. According to an embodiment, the static mixing element comprises steel and is preferably made of steel.

In a third aspect, the invention relates to a use of a flange device according to the second aspect, suitable for mixing or bringing media into contact with each other, at least one of which is a highly viscous liquid, preferably sealants and/or adhesives. An advantage of the present invention is that optimal contact between at least one highly viscous liquid and another media is achieved, wherein all media are mixed in an efficient way.

In a fourth aspect, the invention relates to a final product obtained by a method according to the first aspect, wherein a final product comprises a filling unit, which filling unit comprises a homogeneously mixed liquid fraction, which fraction comprises sealants and/or adhesives mixed with one or more catalysts and/or pigments and/or fungicides at a desired volume percentage. Concretely, the final product comprises the mixed liquid fraction in the injection nozzle of the flange device. A final product can therefore differ from another final product in a volume percentage of catalyst and/or pigments and/or fungicides, in viscosity or in the number of added catalysts and/or pigments and/or fungicides.

According to a preferred embodiment of the present invention, a final product is suitable for a subsequent filling process, wherein desired quantities are dosed via an injection nozzle. The injection nozzle is located at the distal end of the flange device, wherein the injection nozzle is part of a dosing installation, which dosing installation will fill the final product in desired quantities or into a receptacle. Some examples of suitable receptacles are a filling tube, a sausage, a bucket, a bag or a barrel.

According to an embodiment, flowmeters are used to measure the dose. This ensures correct dosing. According to an embodiment, flowmeters that operate ultrasonically are used. Known devices work with a gear counter, but this causes problems when liquid components such as catalyst mixture and fungicide are dosed. Problems identified include inter-gear leakage and jamming due to crystals formed in the liquid components. These problems lead to regular downtime and a lot of maintenance. The mass flow meters that operate ultrasonically have higher accuracy and fast response in case of incorrect dosing.

An advantage of the present invention is that a final product can contain a wide range of possible catalysts and/or pigments and/or fungicides or combinations of catalysts and/or pigments and/or fungicides. An additional advantage is that each final product can contain a different volume percentage of catalyst and/or pigments and/or fungicides.

The detailed description describes the present invention in its preferred embodiments wherein a catalyst and/or pigments and/or fungicides is added in-line to sealants and/or adhesives. It goes without saying that, more specifically, the described invention is also effective for in-line addition of a mixture of catalyst and/or pigments and/or fungicides, wherein the catalyst and/or pigments and/or fungicides are dissolved in, for example, a plasticizer or other solvent before the mixture is added to a liquid fraction. In particular for adding pigments and/or fungicides. Adding and mixing pigment and/or fungicide into the liquid fraction on the way to the filling process enables the production of a wide range of different final products.

A surprising advantage of the present invention is that it is also suitable for adding components other than catalysts alone. In particular, the invention is also suitable for adding plasticizers by means of the current method steps and device.

In what follows, the invention is described by means of an example which will illustrate the invention.

### EXAMPLE

In the example, the present invention is described for in-line addition and mixing of one catalyst to/with a liquid fraction of sealants and/or adhesives.

A conduit containing a liquid fraction of sealants is connected to the inlet of a flange device, which flange device in this example is filled over its entire length with static mixing elements. The flange device here has a length of 30 cm and a diameter of 10 cm. The static mixing elements have a diameter of 52 mm. Just before the inlet of the flange device, the conduit comprises a radial inlet for addition of the catalyst. First it is determined in what volume the catalyst must be dosed, in the current example this is at a catalyst volume percentage of 5% of the liquid fraction. The catalyst is then added to the liquid fraction conduit via the radial inlet.

Subsequently, a pressure of 150 bar is set at the inlet of the flange device. Because of this pressure, the liquid fraction and the catalyst will be pressed through the flange device. During this pressing, the liquid fraction and the catalyst are divided into different layers, so that the different components present in the liquid fraction and the catalyst are spread over the entire cross-section of the flange, resulting in a completely homogeneously mixed liquid fraction and catalyst in the injection nozzle of the flange device. As a result, the catalyst is mixed with the sealants and/or adhesives.

In this way, a homogeneously mixed final product is obtained in the injection nozzle of the flange device, and which contains a catalyst volume percentage of 5% of the liquid fraction. The injection nozzle is attached to a distal end of the flange device.

Once the final product leaves the distal end of the flange device, it can be used for the subsequent filling process by means of the injection nozzle.

The present invention was described for the addition of one catalyst, but it should be clear that the invention can also be used for, for example, the addition of multiple catalysts or even other components such as pigments or fungicides.

## Claims

1. Method for in-line addition and mixing of one or more catalysts and/or pigments and/or fungicides to/with a liquid fraction of sealants and/or adhesives, prior to a filling process, comprising the steps of:
- the in-line addition of a dosed volume, which volume comprises one or more catalysts and/or pigments and/or fungicides, to a conduit containing a liquid fraction of sealants and/or adhesives, the conduit being connected at a distal end to an inlet at a proximal end of a cylindrical flange with static mixing element for homogeneously mixing the components present in the liquid fraction and the dosed volume of catalyst and/or pigments and/or fungicides;
- subsequently setting a pressure at the inlet of the flange;
- finally, mechanically pressing the liquid fraction and the dosed volume of catalyst and/or pigments and/or fungicides through the entire length direction of the flange, which flange is provided with an injection nozzle at a distal end, wherein the liquid fraction and the dosed volume of catalyst and/or pigments and/or fungicides are divided into different layers during pressing, so that the different components present in the liquid fraction and the dosed volume of catalyst and/or pigments and/or fungicides are spread over the whole diameter of the flange, resulting in a completely homogeneously mixed liquid fraction of sealants and/or adhesives with one or more catalysts and/or pigments and/or fungicides in the injection nozzle of the flange.

2. Method according to claim 1, **characterized in that** a pressure is set in the range of 5-180 bar, preferably in the range of 25-165 bar and most preferably in the range of 50-150 bar.

3. Method according to any of the preceding claims, **characterized in that** the mechanical pressing of the liquid fraction and the dosed volume of catalyst and/or pigments and/or fungicides through the entire longitudinal direction of the flange is carried out by a piston pump with a piston suitable for creating a pressure by moving in a vertical direction, and wherein the piston is continuously flushed with plasticizer.

4. Method according to any of the preceding claims, **characterized in that** a dosed volume is added to obtain a volume percentage of catalyst in a final mixed liquid fraction equal to or less than 10 vol%, preferably equal to or less than 7.5 vol% and most preferably equal to or less than 5 vol% of the volume of the liquid fraction.

5. Method according to any of the preceding claims, **characterized in that** the dosed volume that is added in-line is measured by a flow meter operating ultrasonically.

6. Method according to any of the preceding claims, **characterized in that** the liquid fraction and the dosed volume of catalyst and/or pigments and/or fungicides comprise a flow rate through the flange of 1-1000 mm/s, preferably 10-500 mm/s and most preferably 20-300 mm/s.

7. Method according to any of the preceding claims, **characterized in that** an initial liquid fraction of sealants and/or adhesives is pumped from a mixing vat or storage tank through a conduit to the inlet of the flange.

8. Flange device suitable for carrying out a method according to any of the preceding claims 1-7, **characterized in that** a flange device comprises a hollow cylindrical flange housing, wherein the cylindrical flange housing extends along a longitudinal axis, said flange housing comprising at least one static mixing element, said static mixing element comprising a grid of rod-shaped elements, the grid extending in a direction transverse to the longitudinal axis of the cylindrical flange housing.

9. Flange device according to claim 8, **characterized in that** a flange device comprises a diameter, wherein the diameter is measured from wall to wall in the hollow cylindrical flange housing, wherein the diameter of the flange device is approximately equal to a diameter of the static mixing element.

10. Flange device according to any of the preceding claims 8-9, **characterized in that** the flange device comprises 2-5 static mixing elements in series, wherein the various static mixing elements are arranged so that the direction of each grid is transverse to the direction of adjacent grids.

11. Flange device according to any of the preceding claims 8-10, **characterized in that** a flange device has a length which is determined in relation to the viscosity of the liquid fraction to be mixed and in relation to the required homogeneity after mixing.

12. Flange device according to any of the preceding claims 8-11, **characterized in that** one or more static mixing elements are built in along the entire length of the flange device.

13. Use of a flange device according to any of claims 8-12 for mixing or bringing media into contact with each other, at least one of which is a highly viscous liquid, preferably sealants and/or adhesives.

14. End product obtained according to a method according to any of the preceding claims 1-7, **characterized in that** an end product comprises a filling unit, which filling unit comprises a homogeneously mixed liquid fraction, which fraction comprises sealants and/or adhesives mixed with one or more catalysts and/or pigments and/or fungicides at a desired volume percentage.

## Patentansprüche

1. Verfahren zum In-line-Zusetzen und -Mischen eines oder mehrerer Katalysatoren und/oder Pigmente und/oder Fungizide zu/mit einer flüssigen Fraktion von Dichtungsmitteln und/oder Haftstoffen vor einem Abfüllprozess, die folgenden Schritte umfassend:
- das In-Line-Zusetzen eines dosierten Volumens, wobei das Volumen ein(en) oder mehrere Katalysatoren und/oder Pigmente und/oder Fungizide umfasst, zu einer Leitung, die eine flüssige Fraktion von Dichtungsmitteln und/oder Haftstoffen umfasst, wobei die Leitung an einem distalen Ende mit einem Einlass an einem proximalen Ende eines zylindrischen Flansches mit einem statischen Mischelement zum homogenen Mischen der Bestandteile, die in der flüssigen Fraktion und dem dosierten Volumen von Katalysator und/oder Pigmenten und/oder Fungiziden vorhanden sind, verbunden ist,
- anschließendes Einstellen eines Drucks an dem Einlass des Flansches,
- abschließend mechanisches Pressen der flüssigen Fraktion und des dosierten Volumens von Katalysator und/oder Pigmenten und/oder Fungiziden durch die gesamte Längenrichtung des Flansches, wobei der Flansch an einem distalen Ende mit einer Einspritzdüse versehen ist, wobei die flüssige Fraktion und das dosierte Volumen von Katalysator und/oder Pigmenten und/oder Fungiziden während des Pressens in verschiedene Schichten unterteilt werden, so dass die verschiedenen Bestandteile, die in der flüssigen Fraktion und dem dosierten Volumen von Katalysator und/oder Pigmenten und/oder Fungiziden vorhanden sind, über den gesamten Durchmesser des Flansches verteilt werden, was zu einer vollständig homogen gemischten flüssigen Fraktion von Dichtungsmitteln und/oder Haftstoffen mit einem oder mehreren Katalysatoren und/oder Pigmenten und/oder Fungiziden in der Einspritzdüse des Flansches führt.

2. Verfahren nach Anspruch 1, **dadurch gekennzeichnet, dass** ein Druck im Bereich von 5-180 bar eingestellt wird, vorzugsweise im Bereich von 25-165 bar und am meisten bevorzugt im Bereich von 50-150 bar.

3. Verfahren nach einem der vorhergehenden Ansprüche, **dadurch gekennzeichnet, dass** das mechanische Pressen der flüssigen Fraktion und des dosierten Volumens von Katalysator und/oder Pigmenten und/oder Fungiziden durch die gesamte Längenrichtung des Flansches von einer Kolbenpumpe mit einem Kolben durchgeführt wird, der zum Erzeugen eines Drucks durch Bewegung in eine vertikale Richtung geeignet ist, und wobei der Kolben kontinuierlich mit Weichmacher gespült wird.

4. Verfahren nach einem der vorhergehenden Ansprüche, **dadurch gekennzeichnet, dass** ein dosiertes Volumen zugesetzt wird, um einen Volumenprozentsatz an Katalysator in einer finalen gemischten flüssigen Fraktion zu erhalten, der gleich oder kleiner ist als 10 Vol.-%, vorzugsweise gleich oder kleiner als 7,5 Vol.-% und am meisten bevorzugt gleich oder kleiner als 5 Vol.-% des Volumens der flüssigen Fraktion.

5. Verfahren nach einem der vorhergehenden Ansprüche, **dadurch gekennzeichnet, dass** das dosierte Volumen, das in-line zugesetzt wird, durch einen mit Ultraschall arbeitenden Durchflussmesser gemessen wird.

6. Verfahren nach einem der vorhergehenden Ansprüche, **dadurch gekennzeichnet, dass** die flüssige Fraktion und das dosierte Volumen von Katalysator und/oder Pigmenten und/oder Fungiziden eine Durchflussrate durch den Flansch von 1-1000 mm/s umfassen, vorzugsweise 10-500 mm/s und am meisten bevorzugt 20-300 mm/s.

7. Verfahren nach einem der vorhergehenden Ansprüche, **dadurch gekennzeichnet, dass** eine anfängliche flüssige Fraktion von Dichtungsmitteln und/oder Haftstoffen von einem Mischbottich oder einem Lagertank durch eine Leitung zu dem Einlass des Flansches gepumpt wird.

8. Flanschvorrichtung, die zum Ausführen eines Verfahrens nach einem der vorhergehenden Ansprüche 1 bis 7 geeignet ist, **dadurch gekennzeichnet, dass** eine Flanschvorrichtung ein hohlzylindrisches Flanschgehäuse umfasst, wobei sich das zylindrische Flanschgehäuse entlang einer Längsachse erstreckt, wobei das Flanschgehäuse mindestens ein statisches Mischelement umfasst, wobei das statische Mischelement ein Gitter aus stangenförmigen Elementen umfasst, wobei sich das Gitter in einer Richtung quer zu der Längsachse des zylindrischen Flanschgehäuses erstreckt.

9. Flanschvorrichtung nach Anspruch 8, **dadurch gekennzeichnet, dass** eine Flanschvorrichtung einen Durchmesser umfasst, wobei der Durchmesser von Wand zu Wand in dem hohlzylindrischen Flanschgehäuse gemessen ist, wobei der Durchmesser der Flanschvorrichtung ungefähr gleich einem Durchmesser des statischen Mischelements ist.

10. Flanschvorrichtung nach einem der vorhergehenden Ansprüche 8 bis 9, **dadurch gekennzeichnet, dass** die Flanschvorrichtung 2-5 statische Mischelemente in Reihe umfasst, wobei die mehreren statischen Mischelemente so angeordnet sind, dass die Richtung jedes Gitters quer zur Richtung benachbarter Gitter liegt.

11. Flanschvorrichtung nach einem der vorhergehenden Ansprüche 8 bis 10, **dadurch gekennzeichnet, dass** eine Flanschvorrichtung eine Länge aufweist, die im Verhältnis zur Viskosität der zu mischenden flüssigen Fraktion und im Verhältnis zu der erforderlichen Homogenität nach dem Mischen bestimmt wird.

12. Flanschvorrichtung nach einem der vorhergehenden Ansprüche 8 bis 11, **dadurch gekennzeichnet, dass** ein oder mehrere statische Mischelemente entlang der gesamten Länge der Flanschvorrichtung eingebaut sind.

13. Verwendung einer Flanschvorrichtung nach einem der Ansprüche 8 bis 12 zum Mischen oder In-Kontakt-Bringen von Medien miteinander, von denen mindestens eines eine hochviskose Flüssigkeit ist, vorzugsweise Dichtungsmittel und/oder Haftstoffe.

14. Endprodukt, das gemäß einem Verfahren nach einem der vorhergehenden Ansprüche 1 bis 7 erhalten wird, **dadurch gekennzeichnet, dass** ein Endprodukt eine Abfülleinheit umfasst, wobei die Abfülleinheit eine homogen gemischte flüssige Fraktion umfasst, wobei die Fraktion Dichtungsmittel und/oder Haftstoffe, gemischt mit einem oder mehreren Katalysatoren und/oder Pigmenten und/oder Fungiziden in einem gewünschten Volumenprozentsatz, umfasst.

## Revendications

1. Procédé d'apport et de mélange en ligne d'un ou plusieurs catalyseurs et/ou pigments et/ou fongicides à/avec une fraction liquide de produits d'étanchéité et/ou d'adhésifs, avant un procédé de remplissage, comprenant les étapes de :
- l'apport en ligne d'un volume dosé, lequel volume comprend un ou plusieurs catalyseurs et/ou pigments et/ou fongicides, à un conduit contenant une fraction liquide de produits d'étanchéité et/ou d'adhésifs, le conduit étant relié au niveau d'une extrémité distale à une entrée au niveau d'une extrémité proximale d'une bride cylindrique avec un élément de mélange statique pour mélanger de manière homogène les composants présents dans la fraction liquide et le volume dosé de catalyseur et/ou de pigments et/ou de fongicides ;
- ensuite le réglage d'une pression au niveau de l'entrée de la bride ;
- enfin, le pressage mécanique de la fraction liquide et du volume dosé de catalyseur et/ou de pigments et/ou de fongicides sur toute la direction de longueur de la bride, laquelle bride est dotée d'une buse d'injection au niveau d'une extrémité distale, dans lequel la fraction liquide et le volume dosé de catalyseur et/ou de pigments et/ou de fongicides sont divisés en différentes couches pendant le pressage, de sorte que les différents composants présents dans la fraction liquide et le volume dosé de catalyseur et/ou de pigments et/ou de fongicides sont étalés sur le diamètre entier de la bride, résultant en une fraction liquide mélangée complètement de manière homogène de produits d'étanchéité et/ou d'adhésifs avec un ou plusieurs catalyseurs et/ou pigments et/ou fongicides dans la buse d'injection de la bride.

2. Procédé selon la revendication 1, **caractérisé en ce qu'**une pression est réglée dans la plage de 5 à 180 bar, de préférence dans la plage de 25 à 165 bar et de manière préférée entre toutes dans la plage de 50 à 150 bar.

3. Procédé selon l'une quelconque des revendications précédentes, **caractérisé en ce que** le pressage mécanique de la fraction liquide et du volume dosé de catalyseur et/ou de pigments et/ou de fongicides sur toute la direction longitudinale de la bride est réalisé par une pompe à piston avec un piston approprié pour créer une pression en se déplaçant dans une direction verticale, et dans lequel le piston est rincé en continu avec un plastifiant.

4. Procédé selon l'une quelconque des revendications précédentes, **caractérisé en ce qu'**un volume dosé est apporté pour obtenir un pourcentage en volume de catalyseur dans une fraction liquide mélangée finale inférieur ou égal à 10 % en vol., de préférence inférieur ou égal à 7,5 % en vol. et de manière préférée entre toutes inférieur ou égal à 5 % en vol. du volume de la fraction liquide.

5. Procédé selon l'une quelconque des revendications précédentes, **caractérisé en ce que** le volume dosé qui est apporté en ligne est mesuré par un débitmètre fonctionnant par ultrasons.

6. Procédé selon l'une quelconque des revendications précédentes, **caractérisé en ce que** la fraction liquide et le volume dosé de catalyseur et/ou de pigments et/ou de fongicides comprennent un débit à travers la bride de 1 à 1 000 mm/s, de préférence de 10 à 500 mm/s et de manière préférée entre toutes de 20 à 300 mm/s.

7. Procédé selon l'une quelconque des revendications précédentes, **caractérisé en ce qu'**une fraction liquide initiale de produits d'étanchéité et/ou d'adhésifs est pompée à partir d'une cuve de mélange ou d'un réservoir de stockage à travers un conduit jusqu'à l'entrée de la bride.

8. Dispositif à bride approprié pour réaliser un procédé selon l'une quelconque des revendications précédentes 1 à 7, **caractérisé en ce qu'**un dispositif à bride comprend un logement de bride cylindrique creux, dans lequel le logement de bride cylindrique s'étend le long d'un axe longitudinal, ledit logement de bride comprenant au moins un élément de mélange statique, ledit élément de mélange statique comprenant une trame d'éléments en forme de tige, la trame s'étendant dans une direction transversale à l'axe longitudinal du logement de bride cylindrique.

9. Dispositif à bride selon la revendication 8, **caractérisé en ce qu'**un dispositif à bride comprend un diamètre, dans lequel le diamètre est mesuré de paroi à paroi dans le logement de bride cylindrique creux, dans lequel le diamètre du dispositif à bride est approximativement égal à un diamètre de l'élément de mélange statique.

10. Dispositif à bride selon l'une quelconque des revendications précédentes 8 à 9, **caractérisé en ce que** le dispositif à bride comprend 2 à 5 éléments de mélange statiques en série, dans lequel les divers éléments de mélange statiques sont agencés de sorte que la direction de chaque trame est transversale à la direction des trames adjacentes.

11. Dispositif à bride selon l'une quelconque des revendications précédentes 8 à 10, **caractérisé en ce qu'**un dispositif à bride présente une longueur qui est déterminée en relation avec la viscosité de la fraction liquide à mélanger et en relation avec l'homogénéité requise après le mélange.

12. Dispositif à bride selon l'une quelconque des revendications précédentes 8 à 11, **caractérisé en ce qu'**un ou plusieurs éléments de mélange statiques sont construits sur toute la longueur du dispositif à bride.

13. Utilisation d'un dispositif à bride selon l'une quelconque des revendications 8 à 12 pour mélanger ou amener des milieux en contact les uns avec les autres, dont au moins l'un est un liquide hautement visqueux, de préférence des produits d'étanchéité et/ou des adhésifs.

14. Produit final obtenu selon un procédé selon l'une quelconque des revendications précédentes 1 à 7, **caractérisé en ce qu'**un produit final comprend une unité de remplissage, laquelle unité de remplissage comprend une fraction liquide mélangée de manière homogène, laquelle fraction comprend des produits d'étanchéité et/ou des adhésifs mélangés avec un ou plusieurs catalyseurs et/ou pigments et/ou fongicides à un pourcentage en volume souhaité.
